# EUROPEAN PATENT SPECIFICATION

(11) **EP 0 772 754 B1**
(45) Date of publication and mention of the grant of the patent: **21.07.1999**
(21) Application number: 95905671.4
(22) Date of filing: 23.01.1995
(51) Int. Cl.: F24F 5/00, F24D 10/00

(54) **A METHOD AND SYSTEM FOR TRANSFERRING HEATING AND/OR COOLING POWER**
VERFAHREN UND EINRICHTUNG VON HEIZ-UND/ODER KÜHLENERGIE
PROCEDE ET TRANSFERT D'ENERGIE DE CHAUFFAGE ET/OU DE REFROIDISSEMENT

(30) Priority: 24.01.1994 FI 940343
(43) Date of publication of application: 14.05.1997
(73) Proprietor: ABB INSTALLAATIOT OY, 21530 Paimio (FI)
(72) Inventor: LESKINEN, Seppo, (FI)
(74) Representative: Valkeiskangas, Tapio Lassi Paavali
(86) International application number: FI9500030
(87) International publication number: WO9520135

(56) References cited:
- CH-A- 413 288
- DE-B- 1 269 318
- US-A- 5 183 102

## Description

The invention relates to a method for transferring heating/and or cooling power from the heating and cooling power distributing networks to the heating or cooling networks of the building by means of heat exchangers. The invention also relates to a system for transferring heating and/or cooling power.

Today, the buildings of a community are usually heated by district heat, which advantageously can be generated by combined production of electricity and heat. The heat is obtained as condensate heat of the turbines and thus, in a way, without any costs. In condensing power plants producing electricity only, this heat is wasted, for it has to be condensated in the waterways e.g. by sea-water condensers and in the air by means of cooling towers.

In the summer, heat is hardly needed for anything else than production of hot tap water. Yet electricity is used in the summer almost as much as in the winter. Although electricity is not needed for lighting, for example, it is instead needed for cooling especially large buildings. The cooling power needed is usually generated by electricity, by means of cooling compressors. Thermal power stations must thus be used in the summer also, but the generated heat is wasted, i.e. a thermal power station operates just as uneconomically as a condensing power plant does.

However, cooling power can also be generated by hot water or steam by means of so-called absorption heat pumps, the best known of such pumps being lithium-bromide/water and ammonia/water aggregates. The waste heat can thus be utilized, and the use of electricity in the buildings can simultaneously be reduced significantly. This would essentially improve the profitability of a thermal power plant, reducing e.g. CO₂ emissions, etc.

District cooling systems have not become general, however, due to high investment costs. Although the kWh price of the chill generated in this way is low as compared with the kWh price of electricity, the number of hours when the system is used is so small in those climatic zones where district heating systems are worth building that the savings in the operating costs are not sufficient to cover the costs of the district cooling system, absorption aggregate, heat exchangers for buildings, etc. For example in Finland, such systems have thus not been built. The majority of them exist in Japan, Korea and the U.S.A.

Finnish Patent Application 921,034 discloses a heat transferring system for buildings, by which system the temperature of the return water of a district heating system can be dropped notably low, down to about 20°C, if necessary. The system is based on the idea that the heat carrier first emits heat for the heating of the building and then for the heating of the ventilation air.

Simultaneously filed Finnish Patent Application 940,342 (not prepublished) discloses a thermal energy distribution system in which the principle set out in Finnish Patent Application 921,034 is applied and the temperatures of the return water in the cooling and in the heating system are thus designed to be the same, whereby it is possible to arrange a common return pipe for the cooling and heating water and thereby essentially lower the costs of the distribution network. The publication also discloses embodiments by which the costs of a district cooling network can be maintained negligible, which naturally makes a district cooling system more profitable to build and use.

A major cost item in the construction of a district cooling system is heat exchangers, by which cooling power is transferred from the district cooling network to the cooling water network of the building. Since different buildings or parts of a building have simultaneous cooling and heating demand due to different uses of the buildings or parts thereof, and due to different locations, internal heat loads, solar radiation, times of use, etc., separate heat exchangers are needed for heating and for cooling. Their proportion in the investment costs of the entire district cooling system is - according to a research conducted in Finland - about 15%, including the space and mounting costs. The above research has been conducted by order of the Finnish Ministry of Trade and Industry and the Finnish Thermal Power Plant Association. It is entitled 'Concentrated cooling'.

CH-A-413 288 and DE-A-1 269 318 show systems which are parts of intemal heat transfer systems of a building. Said documents describe how heating or cooling power is transferred in said internal systems but if the problems to be solved relate to transferring heating power and/or cooling power from district cooling networks to the heating or cooling networks of the building, ie. to the internal heat transfer systems of a building, the systems described in said two documents offer no help at all .

The object of the invention is to provide a method and system by which the drawbacks of the prior art solutions can be eliminated. This is achieved with the method and system according to the invention. The simple basic idea of the invention is to utilize the heat exchangers inevitably needed in a building. The method of the invention is characterized in that the same liquid/liquid heat exchangers are used for the transmission of heating power in the heating period and the transmission of cooling power in the cooling period. The system of the invention, in turn, is characterized in that the same liquid/liquid heat exchangers are arranged to be used for the transmission of heating power in the heating period and the transmission of cooling power in the cooling period.

The major advantage of the invention is that no separate heat exchangers are needed for district cooling, even if there is simultaneous cooling and heating demand in different parts of a building. Another advantage is that in a peak load situation there is a larger heat transmission surface available than with the present design principles, i.e. a greater cooling power is achieved with a certain water current. Further, the investment costs of a district cooling system are reduced by 15% as stated above, and the operating costs, e.g. pumping efficiency, are slightly lowered as compared with the techniques used thus far.

In the following the invention will be described in greater detail with reference to the solutions and different embodiments of the invention illustrated in the attached drawing, wherein
Fig. 1 shows a general view of a conventional heat transmission system,
Fig. 2 shows the system according to Fig. 1 as applied to more advanced systems,
Fig. 3 shows a simplified general view of a first embodiment of the system according to the invention,
Fig. 4 shows the effect of evaporative cooling on cooling demand,
Fig. 5 shows a more detailed view of the system according to Fig. 3,
Fig. 6 shows a simplified general view of a second embodiment of the system according to the invention,
Fig. 7 shows a more detailed view of the embodiment according to Fig. 6, and
Fig. 8 shows a third embodiment of the system according to the invention.

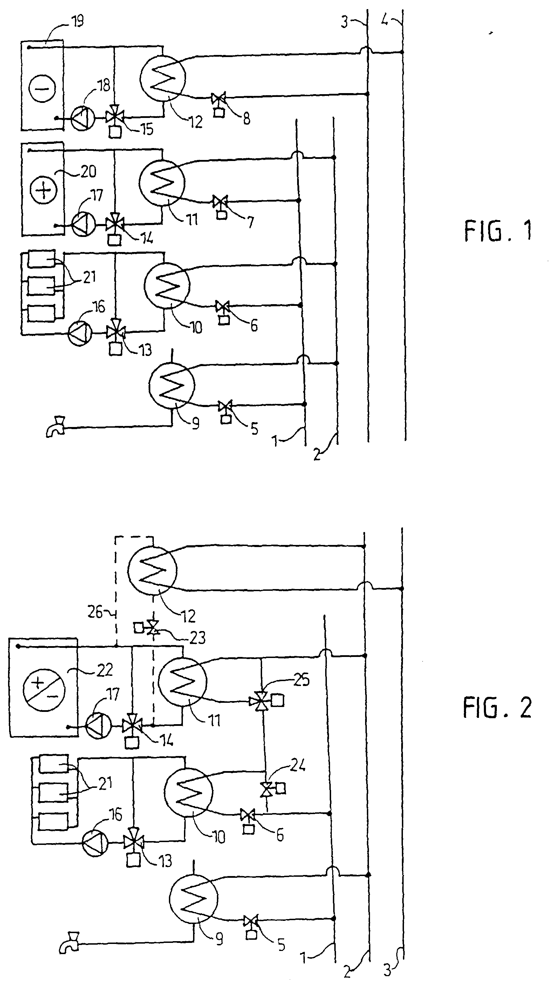

Fig. 1 shows a conventional heat transmission system. Heat is supplied from a district heating plant via a supply pipe 1, and cooled water is returned via a return pipe 2. Correspondingly, cold cooling water is supplied via another supply pipe 3, and heated water is returned via another return pipe 4. For the different operations, there are usually four heat exchangers. Hot tap water is heated in a first heat exchanger 9, and a second heat exchanger 10 serves a radiator network or some other heating system 21 of the building. The water circulated in ventilation air heating devices 20 is heated in a third heat exchanger 11, and for the cooling water circulated in cooling devices 19, there is a fourth heat exchanger 12, as stated above. The return temperature of the district heating water is maintained within the range desired by means of valves 5, 6, 7 and 8. In addition, the circuits for circulated water usually comprise pumps 16, 17 and 18, and by-pass valves 13, 14 and 15. Only the parts that are essential to the understanding of the operation are shown in Fig. 1. The real pipe connecting pattern is much more complicated.

When the present heat exchange technology is applied to more advanced technical systems in which the heat exchanger 10 of the heating system and the heat exchanger 11 of the air conditioning system are connected in series - in accordance with Finnish Patent Application 921,034 - in order to lower the temperature of the return water in a district heating system, and in which the thermic operations of the air conditioning units are combined in the manner disclosed in Finnish Patent Application 915,511, the result is the solution of Fig. 2. In reality, an air conditioning system 22 usually comprises several units, each serving a different part of the building. In the spring and autumn, some of the units are connected to the water circuit of heat exchanger 11 by a valve 25, while others are connected to the water circuit of chill exchanger 12 by a by-pass pipe 26 and valve 23.

The simple basic idea of the invention is that the heat exchangers of the building - which are in any case needed for the heating - are used as such for cooling in the summer, i.e. the same heat exchanger or exchangers are used for transferring heating power in the heating period and cooling power in the cooling period. The operation may be performed in different stages e.g. in such a way that when one or some parts of the building need to be cooled, the heat exchanger of the air conditioning system is disconnected from the district heating network and connected to the cooling network, whereby it serves those parts of the building that need to be cooled. The heat exchanger of the heating system continues to serve those parts that need to be heated. As the outdoor temperature rises, heating demand stops and cooling demand increases, the heat exchanger of the heating system is also disconnected from the district heating network and connected to the district cooling network. The heat exchangers can be connected to the cooling network of a building by a series connection on a countercurrent principle, whereby a very effective heat exchanger is provided, the heat exchanger having a heat delivery surface that is much larger than such surfaces in conventionally designed, separate heat exchangers for district cooling. Differences in temperature are thus very small, and due to these small differences, the water current in a district cooling system is reduced, i.e. the pumping efficiency is reduced. In some cases, it may be even be possible to make the pipes smaller, whereby the pumping efficiency of the cooling system of the building is reduced and/or the investment costs of apparatuses are lowered.

In view of the above, it is thus advantageous in the invention to use two functionally separate heat exchangers, since it is then possible to provide simultaneous heating and cooling in different parts of the building. The term 'functionally separate' means that the heat exchangers are fully independent of each other, so that simultaneous heating and cooling are possible. The heat exchangers may be separate units, or separate pipe coils or the like arranged in a common casing.

The above-mentioned stages of operation can be essentially reduced and sometimes even totally eliminated by providing the air conditioning units with an evaporative cooling system known *per se*.

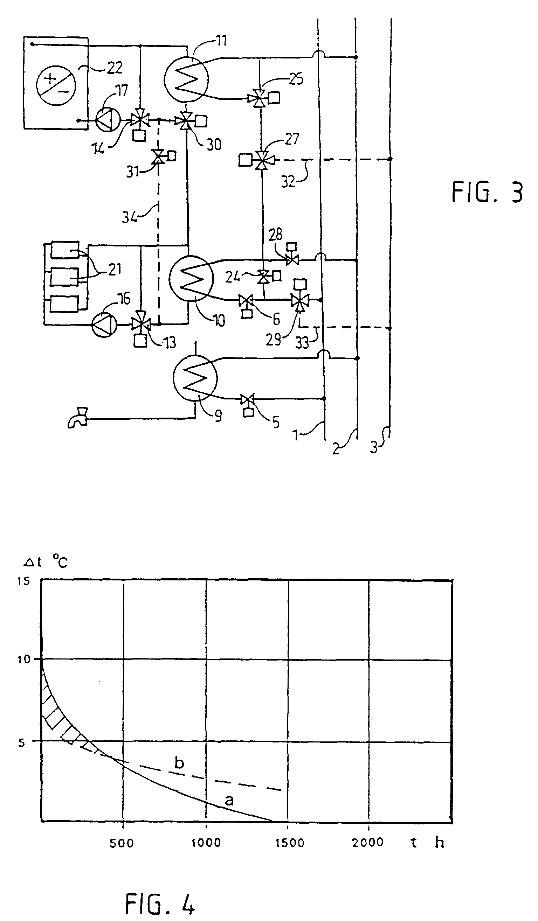

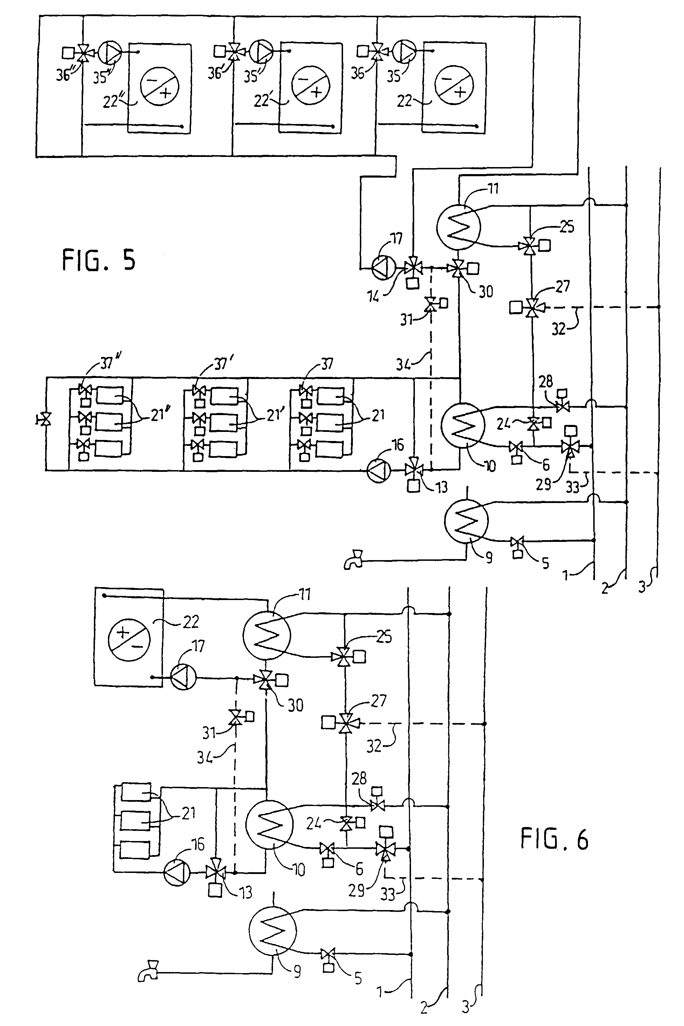

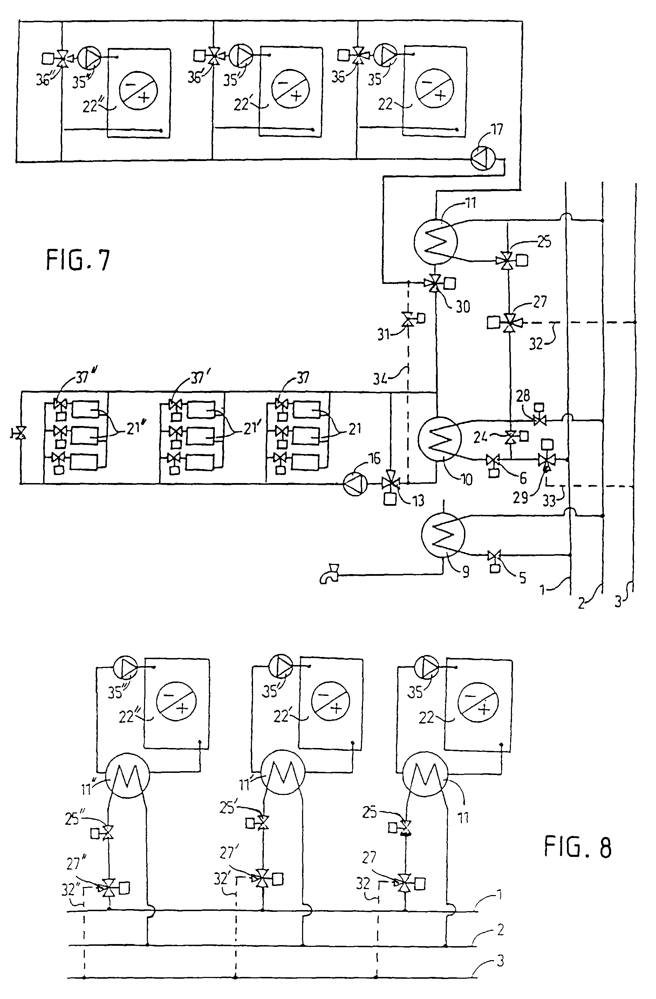

In the following, the invention will be described in greater detail with reference to the simplified schemes shown in Figs. 3 and 6. The embodiments of Figs. 3 and 6 are presented in greater detail in Figs. 5 and 7.

The system of Fig. 3 operates, in principle, in the following manner. The heat exchanger 9 for hot tap water always withdraws water from supply pipe 1 of the district heating network and returns it to return pipe 2. The water current is controlled by valve 5 in accordance with the consumption of hot tap water. This sub-system operates in the same way in all the embodiments and operating situations described below, so the operation will not be re-described in connection with the other examples.

During the frost period in the winter, when all the technology in a building requires heat, both the heat exchanger 10 of the heating system 21 and the heat exchanger 11 of the air conditioning system 22 are connected to the district heating network by a series connection. District heating water flows from supply pipe 1 to heat exchanger 10 through valve 6, which controls the water current in accordance with the heating demand of the heating system 21. Two-position valves 29 and 27 keep service pipes 33 and 32 of supply pipe 3 of the district cooling network closed.

Heating water flows from heat exchanger 10 to heat exchanger 11 through valves 25 and 27, and further to return pipe 25 of the district heating network. If the air conditioning system 22 cannot utilize all the heat contained in the water, valve 25 allows part of the water to flow past heat exchanger 11 directly to return pipe 2. If there is not enough heat, valve 24 opens and allows additional water to flow past heat exchanger 10 to heat exchanger 11.

Pump 16 circulates heating water in the heating system 21 of the building, and pump 17 in the air conditioning system 22. Valves 13 and 14 control the ratio of the water circulating through heat exchangers 10 and 11 to the water flowing past the exchangers, in order to make the temperature of the water circulating in the systems suitable for controlling the room temperatures in the building. A valve 30 keeps the service pipe between heat exchangers 10 and 11 closed, and a valve 31 closes a pipe 34.

When cooling demand arises in the building in the spring, the heat exchanger 11 of the air conditioning system is connected to the cooling network so that valve 27 closes the service pipe leading to the heat exchanger 10 of the heating system and opens the service pipe 32 leading to the supply pipe 3 of the district cooling network. Simultaneously, a valve 28 opens the service pipe of the heat exchanger 10 of the heating system to the return pipe 2 of the district heating system. The heating system 21 and the air conditioning system 22 now operate separately and have different tasks, i.e. the heating system 21 heats the areas where heating is necessary, and the air conditioning system 22 cools the areas where cooling is necessary.

When the outdoor temperature rises further, heating is no longer necessary, and pump 16 stops. Simultaneously, valves 6 and 28 close. The heating system 21 is not in use, and the air conditioning system 22 cools the building.

As the outdoor temperature rises further, the power of heat exchanger 11 may not be sufficient. The heat exchanger 10 of the heating system 22 may then be brought into use in cooling in the following manner. Valve 29 closes the service pipe between heat exchanger 10 and the supply pipe 1 of the district heating system, and opens the service pipe 33 leading to the supply pipe 3 of the district cooling network. Valve 6 is thereby opened, and valve 24 is closed. Correspondingly, valve 27 closes the service pipe 32 between the heat exchanger 1 of the air conditioning system and the supply pipe 3 of the district cooling network, and opens the service pipe leading to the heat exchanger 10 of the heating system. Further, valve 30 closes the service pipe leading to valve 14 and opens the service pipe between heat exchangers 10 and 11. Valve 31 opens the circulating pipe 34. Heat exchangers 10 and 11 are now switched to cooling mode.

Apart from the heat exchanger 11 of the air conditioning system, also the heat exchanger 10 of the heating system is now utilized in cooling. The latter is connected in series on a countercurrent principle, whereby there is usually available a heat delivery surface that is at least double the size of a normal design surface, so the above advantages are advantageously achieved without a separate heat exchanger for cooling.

Simultaneous cooling and heating may be problematic in some buildings. This drawback can usually be eliminated, or at least its effect can be reduced to a minimum, by providing all or at least those air conditioning units that are critical in view of design with an evaporative cooling system known e.g. from Finnish Published Specification 67,259. The operating principle of evaporative cooling is that water is evaporated into exhaust air e.g. by spraying, whereby the evaporating water absorbs heat in an amount that is equivalent to its heat of evaporation, and the temperature of the exhaust air drops. Chill is recovered from the cooled exhaust air and transferred to supply air in a heat recovery unit, which today is almost a standard element in an air conditioning unit.

The effect of evaporative cooling is illustrated by Fig. 4, in which curve a represents the heating demand in a building where the conventional cooling load is about 50 W/m² in the climate prevailing in the South of Finland. The demand is shown as demand for reducing supply air. In the design situation, the temperature would have to be dropped by about 12°C, and cooling is needed for about 1400 hours. Curve b represents the portion that can be covered by evaporative cooling. The hatched area between the curves stands for the portion that has to be covered by external cooling, i.e district cooling. As shown in Fig. 4, external cooling is not needed for more than about 400 hours, and in the design situation the evaporative cooling covers about 7°C. In other words, the district cooling system does not have to cover more than about 5°C, i.e. about 40% of the total design power. Naturally, this essentially reduces the investment costs of district cooling and makes the system more profitable to implement.

External cooling is needed when outdoor air would have to be cooled by more than 4°C. If, for example, cooling becomes necessary at 16°C, district cooling is not needed until the outdoor temperature is 20°C. Since at this temperature, usually no part of the building has to be heated, different stages are not needed but heat exchangers 10 and 11 can be simultaneously shifted from one operation to the other. This somewhat simplifies the connections shown in Fig. 3, e.g. valves 27, 28 and 30 and corresponding service pipes are not needed.

Fig. 5 shows a more detailed view of the system of Fig. 3. In Fig. 5, references 22, 22' and 22" stand for air conditioning units, and 21, 21' and 21" for corresponding radiator heating circuits in the building. In a situation where e.g. units 22 and 22' need to be cooled and the area served by unit 22" needs to be heated, heat exchanger 11 is connected to the district cooling pipe 3 and heat exchanger 10 to the district heating pipe. Radiator valves 37, 37' and 37" are used for regulating the temperature in individual rooms. In the exemplary situation, radiator valves 37 and 37" of the heat exchangers for the areas that have to be cooled are closed, i.e. radiators 21 and 21' are not heating. Valves 37" are open, and radiators 21" are heating this area. Correspondingly, control valves 36 and 36' of the air conditioning units 22 and 22' are open and obtain cooling power from the circulating flow circuit of heat exchanger 11. Valve 36" does not obtain cooling power for unit 22". The operations of the embodiment shown in Fig. 5 are similar to those presented in connection with the embodiment of Fig. 3.

Figs. 6 and 7 show a slightly different connection. The scheme of Fig. 6 is a simplified version of the solution of Fig. 7. In the connection shown in Figs. 6 and 7, heat exchanger 11 and in a cooling situation also heat exchanger 10 are connected directly to the circulating flow circuit of the air conditioning units 22, 22' and 22", whereby e.g. valve 14 shown in Fig. 3 is not needed. The temperature is regulated by valves 25, 6 and 13. In other respects the operations correspond to those presented in the above embodiment.

An even simpler connection is implemented by dividing heat exchanger 11 so that each air conditioning unit 22, 22' and 22" has its own heat exchanger; e.g. pump 17 and valves 36, 36' and 36" shown e.g. in Fig. 7 are then not needed. This kind of connection is shown in Fig. 8. Each unit 22, 22' and 22" has its own heat exchanger 11, 11' and 11" which may be used for heating or cooling, whichever is opted for. This kind of solution is especially well suited for air heating systems.

The system of Fig. 8 may render heat exchangers more expensive, if there are many units. The piping may also be expensive, and it may be problematic to arrange the piping for district heating/district cooling in a building. Heat exchanger 11 can then be divided into two parts that, connected in series, can be used for heating or cooling in a peak load situation. When there is simultaneous heating and cooling demand, one of the parts is connected to the district heating and the other to the district cooling network. The switching between the networks and individual units is implemented in line with the above principles.

The above embodiments are not intended to restrict the invention in any way, but the invention can be modified quite freely within the scope of the claims. It is thus to be understood that the system of the invention or the details thereof need not be identical to what is presented in the figures, but other kinds of solutions are also possible. Above are described e.g. solutions where the source of thermal energy is a district heating or district cooling network. The source, however, may be any known system that generates heating or cooling power. In the examples, the invention is applied to combining of heat exchangers of air conditioning units according to Finnish Patent Application 915,511. However, this is not the only possibility, but all known heat exchanger connections that are used in air conditioning units, e.g. separate heating and cooling radiators, fall within the scope of the invention. Further, the heating system need not be the radiator system illustrated in the figures, but e.g. a floor heating system is also quite possible, and so are other systems that are known *per* se, e.g. radiation heaters and different convectors. Air heating systems are described separately in connection with Fig. 8, but other sources of heat can also be applied, e.g. gas or electrical heating. In the figures and the embodiments, heat exchangers 10 and 11 are connected in series on a countercurrent principle, since this is the most advantageous embodiment. The invention naturally also concerns applications where heat exchangers are - for some special reason - connected in parallel and/or on a concurrent principle. Heat exchangers 10 and 11 are presented as being separate, but the invention naturally also concerns a solution known *per* se where a single heat exchanger comprises separate coils or other such heat transmission means for cooling and for ventilation. In a gas or electrical heating system mentioned above, there is naturally only a heat exchanger 11 for ventilation, and it is used for heating in the winter and cooling in the summer.

## Claims

1. A method for transferring heating/and or cooling power from the external heating and cooling power distributing networks to the heating or cooling networks (21, 22) of the building by means of heat exchangers (10, 11, 12), **characterized** in that the same liquid/liquid heat exchangers (10, 11) are used for the transmission of heating power in the heating period and the transmission of cooling power in the cooling period.

2. The method according to claim 1, **characterized** in that to make simultaneous heating and cooling in the different parts of the building possible, heating and cooling power are transferred by at least two functionally separate heat exchangers (10, 11).

3. The method according to claim 1 or 2, **characterized** in that the change-over from the heating operation to the cooling operation or vice versa is conducted in different stages in such a way that one heat exchanger (11) is shifted from one operation to the other and later, when the load increases, another exchanger (10) is or the other exchangers are shifted.

4. The method according to any one of preceding claims 1 to 3, **characterized** in that cooling power is transferred by the heat exchanger (10) of the heating system (21) in the building.

5. A system for transferring heating and/or cooling power from the external heating and cooling power distributing networks to the heating or cooling networks (21, 22) of the building by means of heat exchangers (10, 11, 12), **characterized** in that the same liquid/liquid heat exchangers (10, 11) are arranged to be used for the transmission of heating power in the heating period and the transmission of cooling power in the cooling period.

6. The system according to claim 5, **characterized** in that to make simultaneous heating and cooling possible, at least two functionally separate heat exchangers (10, 11) are arranged in different parts of the building.

7. The system according to claim 5 or 6, **characterized** in that the heat exchangers (10, 11) are connected in such a way that the change-over from the heating operation to the cooling operation or vice versa can be conducted in different stages in such a way that one heat exchanger (11) is shifted from one operation to the other and later, when the load increases, another exchanger (10) is or the other exchangers are shifted.

8. The system according to any one of preceding claims 5 to 7, **characterized** in that the transmission of cooling power is arranged to be performed by the heat exchanger (10) of the heating system (21) in the building.

9. The system according to any one of preceding claims 5 to 8, **characterized** in that the heat exchangers (10, 11) are arranged to be connected in series with respect to the distribution network-in a peak load situation.

10. The system according to any one of preceding claims 5 to 8, **characterized** in that in a cooling situation, the heat exchangers (10, 11) are arranged to be connected in series with respect to both the distribution network and the cooling network of the building on a countercurrent principle.

11. The system according to any one of preceding claims 5 to 10, **characterized** in that to eliminate simultaneous heating and cooling demand, the air conditioning units (22) of the building are provided with an evaporative cooling system.

12. The system according to any one of preceding claims 5 to 11, **characterized** in that to provide a cooling operation in an air heating system, the heat exchanger (11) between the air heating system and the heat distribution network is divided into two parts.

13. The system according to any one of preceding claims 5 to 11, **characterized** in that the heat exchanger/heat exchangers (10, 11) between the distribution network and the networks of the building are arranged directly in the circulating flow circuits or circulating flow circuit of the devices (22) using the power transferred.

## Patentansprüche

1. Verfahren zum Übertragen von Heiz- und/oder Kühlenergie von externen Heiz- und Kühlenergie-Verteilnetzen zu den Heiz- oder Kühlnetzen (21, 22) des Gebäudes mittels Wärmetauschern (10, 11, 12), **dadurch gekennzeichnet, daß** dieselben Flüssigkeits/Flüssigkeits-Wärmetauscher (10, 11) zum Übertragen der Heizenergie während der Heizperiode und zum Übertragen von Kühlenergie während der Kühlperiode eingesetzt werden.

2. Verfahren nach Anspruch 1, **dadurch gekennzeichnet, daß** Heiz- und Kühlenergie durch mindestens zwei funktionell getrennte Wärmetauscher (10, 11) übertragen wird, damit das gleichzeitige Heizen und Kühlen unterschiedlicher Teile des Gebäudes ermöglicht wird.

3. Verfahren nach Anspruch 1 oder 2, **dadurch gekennzeichnet, daß** das Umstellen von dem Heizbetrieb zu dem Kühlbetrieb oder umgekehrt in unterschiedlichen Stufen derart durchgeführt wird, daß ein Wärmetauscher (11) von einem Betrieb zu dem anderen umgestellt wird, und später bei zunehmender Last ein anderer Austauscher (10) oder andere Austauscher umgestellt werden.

4. Verfahren nach einem der vorangehenden Ansprüche 1 bis 3, **dadurch gekennzeichnet, daß** die Kühlenergie durch den Wärmetauscher (10) des Heizsystems (21) in dem Gebäude übertragen wird.

5. System zum Übertragen von Heiz- und/oder Kühlenergie von externen Heiz- und Kühlenergie-Verteilnetzen zu Heiz- oder Kühlnetzen (21, 22) des Gebäudes mittels Wärmetauscher (10, 11, 12), **dadurch gekennzeichnet, daß** dieselben Flüssigkeits/Flüssigkeits-Wärmetauscher (10, 11) so ausgebildet sind, daß deren Einsatz zum Übertragen von Heizenergie während der Heizperiode und zum Übertragen von Kühlenergie während der Kühlperiode erfolgt.

6. System nach Anspruch 5, **dadurch gekennzeichnet, daß** mindestens zwei funktionell getrennte Wärmetauscher (10, 11) in unterschiedlichen Teilen des Gebäudes angeordnet sind, damit das gleichzeitige Heizen und Kühlen möglich ist.

7. System nach Anspruch 5 oder 6, **dadurch gekennzeichnet, daß** die Wärmetauscher (10, 11) so verbunden sind, daß das Umstellen von dem Heizbetrieb zu dem Kühlbetrieb oder umgekehrt in unterschiedlichen Stufen erfolgt, derart, daß ein Wärmetauscher (11) von einem Betrieb zu dem anderen umgestellt wird und anschließend bei zunehmender Last ein anderer Austauscher oder andere Austauscher umgestellt werden.

8. System nach einem der vorangehenden Ansprüche 5 bis 7, **dadurch gekennzeichnet, daß** die Übertragung von Kühlenergie so vorgesehen ist, daß sie durch den Wärmetauscher (10) in dem Heizsystem (21) des Gebäudes erfolgt.

9. System nach einem der vorangehenden Ansprüche 5 bis 8, **dadurch gekennzeichnet, daß** die Wärmetauscher (10, 11) so ausgebildet sind, daß sie seriell bezogen auf das Verteilungsnetz bei einer Spitzenlastsituation verbunden sind.

10. System nach einem der vorangehenden Ansprüche 5 bis 8, **dadurch gekennzeichnet, daß** bei einer Kühlsituation die Wärmetauscher (10, 11) so ausgebildet sind, daß sie in Serie im Hinblick sowohl auf das Verteilnetz und das Kühlnetz des Gebäudes nach einem Gegenstromprinzip verbunden sind.

11. System nach einem der vorangehenden Ansprüche 5 bis 10, **dadurch gekennzeichnet, daß** zum Eliminieren des Bedarfs für ein gleichzeitiges Heizen und Kühlen die Klimatisierungseinheiten (22) des Gebäudes mit einem Verdampfungskühlsystem versehen sind.

12. System nach einem der vorangehenden Ansprüche 5 bis 11, **dadurch gekennzeichnet, daß** zum Ermöglichen eines Kühlbetriebs in einem Luftheizsystem der Wärmetauscher (11) zwischen dem Luftheizsystem und dem Wärmeverteilnetz in zwei Teile unterteilt ist.

13. System nach einem der vorangehenden Ansprüche 5 bis 11, **dadurch gekennzeichnet, daß** der/die Wärmetauscher (10, 11) zwischen dem Verteilnetz und den Netzen des Gebäudes so ausgebildet sind, daß sie direkt in den Zirkulationsströmungskreisen oder dem Zirkulationsströmungskreis der die übertragende Energie nützenden Einrichtungen (22) liegt/liegen.

## Revendications

1. Procédé de transfert d'énergie de chauffage et/ou de refroidissement, provenant de réseaux externes de distribution d'énergie de chauffage et de refroidissement vers des réseaux de chauffage ou de refroidissement (21, 22) du bâtiment à l'aide d'échangeurs de chaleur (10, 11, 12), caractérisé en ce que les mêmes échangeurs de chaleur liquide-liquide (10, 11) sont utilisés pour la transmission d'énergie de chauffage pendant la période de chauffage et pour la transmission d'énergie de refroidissement pendant la période de refroidissement.

2. Procédé selon la revendication 1, caractérisé en ce que, pour qu'un chauffage et un refroidissement puissent être réalisés simultanément dans des parties différentes d'un bâtiment, les puissances de chauffage et de refroidissement sont transférées par au moins deux échangeurs de chaleur fonctionnellement séparés (10, 11).

3. Procédé selon la revendication 1 ou 2, caractérisé en ce que la commutation de l'opération de chauffage à l'opération de refroidissement ou inversement est réalisée en différentes étapes de manière qu'un échangeur de chaleur (11) passe d'une opération à l'autre et que, ultérieurement, lorsque la charge augmente, un autre échangeur de chaleur (10) ou les autres échangeurs de chaleur subissent un changement d'opération.

4. Procédé selon l'une quelconque des revendications 1 à 3, caractérisé en ce que l'énergie de refroidissement est transférée par l'échangeur de chaleur (10) du système de chauffage (21) dans le bâtiment.

5. Système de transfert d'énergie de chauffage et/ou de refroidissement de réseaux extérieurs de distribution d'énergie de chauffage et de refroidissement aux réseaux de chauffage ou de refroidissement (21, 22) du bâtiment par des échangeurs de chaleur (10, 11, 12), caractérisé en ce que les mêmes échangeurs de chaleur liquide-liquide (10, 11) sont destinés à être utilisés pour la transmission d'énergie de chauffage pendant la période de chauffage et d'énergie de refroidissement pendant la période de refroidissement.

6. Système selon la revendication 5, caractérisé en ce que, pour que le chauffage et le refroidissement puissent être réalisés simultanément, deux échangeurs de chaleur fonctionnellement séparés (10, 11) au moins sont disposés dans des parties différentes du bâtiment.

7. Système selon la revendication 5 ou 6, caractérisé en ce que les échangeurs de chaleur (10, 11) sont connectés de manière que la commutation de l'opération de chauffage à l'opération de refroidissement ou inversement puisse être réalisée dans des étapes différentes d'une manière telle qu'un premier échangeur de chaleur (11) est commuté d'une opération à l'autre et ultérieurement, lorsque la charge augmente, un autre échangeur de chaleur (10) ou les autres échangeurs de chaleur sont commutés.

8. Système selon l'une quelconque des revendications précédentes 5 à 7, caractérisé en ce que la transmission d'énergie de refroidissement est destinée à être réalisée par l'échangeur de chaleur (10) du système de chauffage (21) qui se trouve dans le bâtiment.

9. Système selon l'une quelconque des revendications précédentes 5 à 8, caractérisé en ce que les échangeurs de chaleur (10, 11) sont destinés à être raccordés en série avec le réseau de distribution en cas de charge de pointe.

10. Système selon l'une quelconque des revendications précédentes 5 à 8, caractérisé en ce que, en cas de refroidissement, les échangeurs de chaleur (10, 11) sont destinés à être raccordés en série avec le réseau de distribution et le réseau de refroidissement du bâtiment par mise en oeuvre du principe de la circulation à contre-courant.

11. Système selon l'une quelconque des revendications précédentes 5 à 10, caractérisé en ce que, pour que la demande simultanée de chauffage et de refroidissement soit éliminée, les unités de conditionnement d'air (22) du bâtiment comportent un système de refroidissement par évaporation.

12. Système selon l'une quelconque des revendications précédentes 5 à 11, caractérisé en ce que, pour qu'une opération de refroidissement soit assurée dans un système de chauffage d'air, l'échangeur de chaleur (11) placé entre le système de chauffage d'air et le réseau de distribution de chaleur est divisé en deux parties.

13. Système selon l'une quelconque des revendications précédentes 5 à 11, caractérisé en ce que l'échangeur de chaleur ou les échangeurs de chaleur (10, 11) placés entre le réseau de distribution et les réseaux du bâtiment sont placés directement dans les circuits de circulation ou dans le circuit de circulation des dispositifs (22) qui utilisent l'énergie transférée.
